# EUROPÄISCHE PATENTSCHRIFT

(11) **EP 0 723 085 B1**
(45) Veröffentlichungstag und Bekanntmachung des Hinweises auf die Patenterteilung: **04.02.1998**
(21) Anmeldenummer: 95810747.6
(22) Anmeldetag: 29.11.1995
(51) Int. Cl.: F16B 13/12

(54) **Spreizdübel**
Expanding wall plug
Cheville à expansion

(30) Priorität: 23.01.1995 DE 19501911
(43) Veröffentlichungstag der Anmeldung: 24.07.1996
(73) Patentinhaber: HILTI Aktiengesellschaft, 9494 Schaan (LI)
(72) Erfinder: Höfle, Siegfried, A-6840 Götzis (AT)
(74) Vertreter: Wildi, Roland

(56) Entgegenhaltungen:
- DE-A- 2 538 927
- DE-A- 4 317 492
- US-A- 3 808 938

## Beschreibung

Die Erfindung betrifft einen Spreizdübel mit einem zylindrischen Hülsenkörper, der einen Spreizbereich mit Längsschlitzen bzw. Brechnuten aufweist und eine sich konisch verjüngende Bohrung besitzt, die zur Aufnahme eines Spreizkörpers ausgebildet ist, und im Spreizbereich mit umlaufenden Rillen von etwa V-förmigem Profil ausgestattet ist, die durch umlaufende zylindrische Bereiche getrennt sind.

Spreizdübel der gattungsgemässen Art weisen im Spreizbereich des Hülsenkörpers eine sich in Eintreibrichtung verjüngende konische Bohrung auf. Beim Eintreiben eines mit einem Aussenkonus oder mit einer zylindrischen Mantelfläche versehenen Spreizkörpers in die konische Bohrung wird der Spreizbereich des Hülsenkörpers aufgeweitet. Durch das Aufweiten des Spreizbereichs wird auf das umgebende Material eines in ein Bohrloch eingesetzten Spreizdübels ein hoher Radialdruck ausgeübt. Der Ausziehwiderstand des Spreizdübels ist im wesentlichen eine Folge des Kraftschlusses des gegen das umgebende Material, üblicherweise Beton, gepressten Spreizbereichs des Hülsenkörpers.

Zur Verbesserung der Ausziehwiderstandswerte ist in der US-A-3,808,938 vorgeschlagen, im Spreizbereich des Hülsenkörpers feine umlaufende Rillen anzuordnen. Die sägezahnartig ausgebildeten Rillen mit etwa V-förmigem Profil sollen sich beim Aufweiten des Spreizbereichs in das umgebende Material graben. Auf diese Weise soll der Kraftschluss durch einen gewissen Formschluss unterstützt werden, und sollen die Ausziehwiderstandswerte erhöht werden. Die sägezahnartig ausgebildeten, feinen Rillen werden jedoch oft schon beim Einschlagen des Hülsenkörpers in den Untergrund beschädigt, und durch den hohen Anpressdruck im Spreizbereich werden die spitz zulaufenden Stege zwischen den Rillen verformt. Dadurch wird kein vernünftiger Formschluss mehr erreicht, und die Ausziehwiderstandswerte erreichen nicht die gewünschte Grösse. Ein weiterer Nachteil der sägezahnartig ausgebildeten Rillen besteht darin, dass die gegen das umgebende Material gepressten spitzen Stege dieses aufreissen und pulverisieren können, wodurch kein ausreichender Kraftschluss mehr erreicht wird und der Ausziehwiderstand gegenüber den Spreizdübeln ohne Rillen sogar verschlechtert werden kann.

In der DE-A-25 56 019 ist daher vorgeschlagen, im Spreizbereich des Hülsenkörpers eine flache umlaufende Rille auszubilden, welche im Profil kerbfrei ausgebildet ist. Die vorgeschlagene Ausbildung des Hülsenkörpers zusammen mit einer speziellen Gestaltung der Hülsenbohrung und des Spreizkörpers soll die Ausziehwerte gegenüber den bekannten Lösungen verbessern. Das sanfte Profil der Rille soll verhindern, dass der Untergrund beschädigt wird. Die kerbfreie Ausbildung der Rille soll ferner das Einknicken, Umbiegen und das Brechen des Hülsenkörpers im Rillenbereich verhindern. In gerissenem Beton können die Ausziehwerte der vorgeschlagenen Spreizdübel aber oft die geforderten Mindestausziehwerte nicht mehr erreichen. Es kann sogar zu einem vollkommenen Versagen einer Verankerung kommen. Aus Sicherheitsgründen sollen derartige Spreizdübel des Standes der Technik nicht in die Zugzone des Betons gesetzt werden.

Aus der den nächsten Stand der Technik bildenden DE-A-25 38 927 ist ein Spreizdübel bekannt, dessen zylindrischer Hülsenkörper einen Spreizbereich mit Längsschlitzen aufweist und eine sich konisch verjüngende Bohrung besitzt, die zur Aufnahme eines Spreizkörpers ausgebildet ist. Im Spreizbereich ist der Hülsenkörper mit umlaufenden Rillen von etwa V-förmigem Profil ausgestattet, die durch umlaufende zylindrische Bereiche voneinander getrennt sind. Die Flankenwinkel der umlaufenden Rillen sind derart bemessen, dass beim Aufspreizen des Spreizdübels der Hülsenkörper einknicken, sich umbiegen oder sogar brechen kann. Dadurch können die Auszugswerte herabgesetzt und insbesondere in gerissenem Beton die geforderten Mindestauszugswerte nicht erreicht werden.

Es besteht daher der Wunsch, einen Spreizdübel der gattungsgemässen Art dahingehend zu verbessern, dass er erhöhte Ausziehwerte aufweist und insbesondere auch in gerissenem Beton die geforderten Mindestausziehwerte erreicht. Der Spreizdübel soll derart verbessert werden, dass er auch in die Zugzone des Betons gesetzt werden kann, ohne dadurch Sicherheitsaspekte zu vernachlässigen. Dabei soll die Formstabilität des Hülsenkörpers gewahrt bleiben und insbesondere eine ungewünschte Verformung bzw. ein Materialversagen im Spreizbereich verhindert werden.

Diese Aufgaben werden erfindungsgemäss durch einen Spreizdübel gelöst, welcher die im kennzeichnenden Abschnitt des Patentanspruchs 1 aufgeführten Merkmale aufweist. Überraschend wurde gefunden, dass ein Spreizdübel mit einem zylindrischen Hülsenkörper, der einen Spreizbereich mit Längsschlitzen bzw. Brechnuten und eine sich konisch verjüngende Bohrung aufweist, die zur Aufnahme eines Spreizkörpers ausgebildet ist, und im Spreizbereich umlaufende Rillen von etwa V-förmiger Kontur besitzt, die durch umlaufende zylindrische Bereiche getrennt sind und deren Flanken einen Winkel von etwa 120° bis etwa 140° einschliessen, die geforderten Aufgaben erfüllt und insbesondere in gerissenem Beton die erforderlichen Sicherheiten bietet. Zwar weisen die Rillen eine kerbenartige Kontur auf, durch die erfindungsgemässen stumpfen Winkel ist jedoch gewährleistet, dass der Hülsenkörper im Spreizbereich nicht einknickt, sich nicht umbiegt und nicht bricht.

Es erweist sich als vorteilhaft, wenn der Hülsenkörper im Spreizbereich wenigstens zwei umlaufende Rillen aufweist und wenn die Anzahl der umlaufenden zylindrischen Bereiche der Anzahl Rillen entspricht.

In einer bevorzugten Ausführungsvariante der Erfindung weisen die Rillen eine Breite auf, die etwa das Dreifache bis etwa das Zehnfache einer Breite des die Rillen trennenden zylindrischen Bereichs beträgt. Bei diesen Verhältnissen können besonders gute Ausziehwerte erreicht werden.

Die Formstabilität des Hülsenkörpers und die Sicherheit gegenüber einem Materialversagen im Spreizbereich ist noch dadurch unterstützt, dass die Rillen eine Tiefe aufweisen, die maximal der halben Wandstärke des zylindrischen Hülsenkörpers des sich an die sich konisch verjüngende Bohrung anschliessenden Bereiches des Hülsenkörpers entspricht.

In einer bevorzugten Ausführungsvariante des erfindungsgemässen Spreizdübels entspricht die Tiefe der Rillen im Spreizbereich des Hülsenkörpers etwa der Breite des die Rillen trennenden zylindrischen Bereichs. Bei diesen Verhältnissen trägt das im Rillenbereich unmittelbar gegen den Hülsenkörper anliegende Aufnahmematerial bei gleichzeitiger Entlastung der Zylinderbereiche zwischen den Rillen mit zur Verbesserung des Reibschlusses bei und wird ein sehr guter Formschluss erreicht.

Bei den üblichen Abmessungen des erfindungsgemässen Spreizdübels erweist es sich als vorteilhaft, wenn der Spreizbereich des zylindrischen Hülsenkörpers maximal vier Rillen aufweist. Auf diese Weise ist über den Spreizbereich des Hülsenkörpers ein ausgewogenes Verhältnis von Reib- und Formschluss gegeben, was insbesondere bei gerissenem Beton von Bedeutung sein kann.

Im folgenden wird die Erfindung unter Bezugnahme auf die beispielsweisen Darstellungen näher erläutert. Es zeigen in teilweise längsgeschnittener Darstellung:
- Fig. 1: einen Spreizdübel umfassend einen Hülsenkörper und einen Spreizkörper und
- Fig. 2: einen Spreizbereich des Hülsenkörpers.

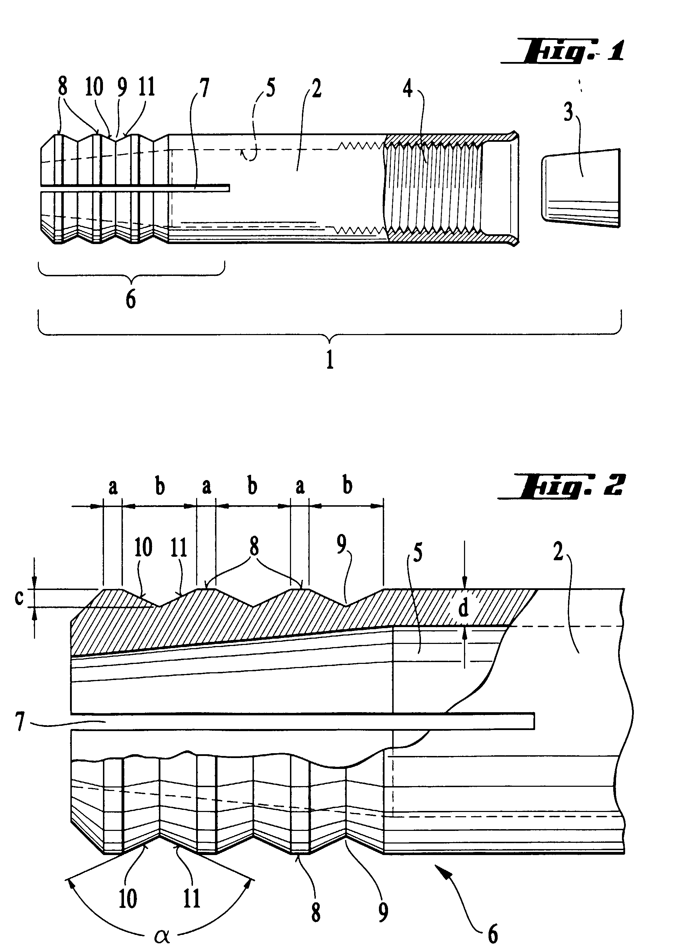

Der in den Fig. 1 und 2 dargestellte beispielsweise erfindungsgemässe Spreizdübel ist in Fig. 1 gesamthaft mit dem Bezugszeichen 1 versehen. Er umfasst einen Hülsenkörper 2 und einen Spreizkörper 3. Der in Setzrichtung vordere Bereich des Hülsenkörpers 2 ist als Spreizbereich 6 ausgebildet. Der Spreizbereich 6 ist mit Längsschlitzen 7 bzw. Brechnuten versehen und besitzt eine sich konisch verjüngende Bohrung 5, die zur Aufnahme des Spreizkörpers 3 ausgebildet ist. Im hinteren Bereich des Hülsenkörpers 2 sind Mittel zum Angriff einer Last vorgesehen. Beispielsweise sind die Lastangriffsmittel, wie dargestellt, als Gewindebohrung 4 ausgebildet, in welche ein Befestigungsanker einschraubbar ist. Der von aussen durch die Gewindebohrung 4 einsetzbare Spreizkörper 3 weist eine sich in Eintreibrichtung verjüngende Form auf. Die zusammenwirkenden Innenflächen der konischen Bohrung 5 und die Aussenflächen des Spreizkörpers 3 sind derart aufeinander abgestimmt, dass der Spreizbereich 6 beim Eintreiben des Spreizkonus 3 gleichmässig aufgespreizt wird, um so eine Haftung des Spreizdübels 1 im Bohrloch zu erzielen.

Zur Verbesserung der Haftung des Spreizdübels 1 im Bohrloch ist der Hülsenkörper 2 im Spreizbereich 6 mit umlaufenden Rillen 9 versehen, die von umlaufenden zylindrischen Bereichen 8 getrennt sind. Die Rillen weisen eine etwa V-förmige Kontur auf, wobei die Flanken 10, 11 der Rillen einen Winkel α von etwa 120° bis etwa 140° einschliessen. Die Kombination von wenigstens zwei V-förmig profilierten Rillen und einem diese trennenden zylindrischen Bereich erlaubt ein einfaches Setzen des Spreizdübels 1. Die zylindrische Fläche 8 gleitet entlang der Bohrlochwandung, ohne den Untergrund zu verletzen. Beim Eintreiben des Spreizkörpers 3 in die konische Bohrung 5 wird der Spreizbereich 6 gleichmässig aufgeweitet und eine optimale Haftverbindung zum Bohrloch erstellt. Der zylinderförmige Bereich 8 und die spezielle Ausbildung der V-förmig profilierten Rillen 9 gewährleisten, dass der Untergrund beim Aufweiten des Hülsenkörpers 2 im Spreizbereich 6 nicht pulverisiert werden kann, sondern dass seine Struktur im wesentlichen erhalten bleibt. Die Flanken 10, 11 der Rillen 9 werden gegen die Bohrlochwandung gepresst, wodurch der Untergrund gemäss der Abfolge Rillen - zylindrischer Bereich verformt wird und zusätzlich zum Reibungsschluss auch ein Formschluss zwischen der Bohrlochwandung und dem im Spreizbereich 6 aufgeweiteten Hülsenkörper 2 entsteht.

In einer bevorzugten Ausführungsvariante der Erfindung weisen die Rillen 9 eine Breite b auf, die etwa das Dreifache bis etwa das Zehnfache der Breite a der die Rillen 9 trennenden zylindrischen Bereiche 8 beträgt. Die Tiefe c der Rillen 9 ist derart bemessen, dass sie maximal der halben Wandstärke d des zylindrischen Hülsenkörpers 2 im Bereich der Gewindebohrung 4 entspricht. Gemäss dem dargestellten Ausführungsbeispiel sind die Tiefe c der Rillen 9 und die Breite a der zylindrischen Bereiche 8 etwa gleich gross gewählt. Die Anzahl der Rillen 9 im Spreizbereich 6 des Hülsenkörpers 2 beträgt wenigstens zwei, beispielsweise wie dargestellt drei, maximal jedoch vier Rillen, die von ebensovielen zylindrischen Bereichen 8 getrennt werden. Dabei befindet sich der erste zylindrische Bereich 8 im in Setzrichtung vorderen Bereich des Hülsenkörpers 2 vor der ersten Rille 9.

Der erfindungsgemäss ausgebildete Spreizdübel kann ein Metalldübel sein, er kann auch aus Kunststoff gefertigt sein. Der Spreizdübel weist gegenüber den Dübeln des Stands der Technik erhöhte Ausziehwerte auf und erreicht insbesondere auch in gerissenem Beton die geforderten Mindestausziehwerte. Durch die spezielle Ausgestaltung der Rillen und der dazwischen angeordneten zylindrischen Bereiche bleibt die Formstabilität des Hülsenkörpers gewahrt und werden ungewünschte Verformungen bzw. ein Materialversagen im Spreizbereich verhindert. Der erfindungsgemässe Spreizdübel ist ohne Vernachlässigung von Sicherheitsaspekten auch in die Zugzone des Betons einsetzbar.

## Patentansprüche

1. Spreizdübel mit einem zylindrischen Hülsenkörper (2), der einen Spreizbereich (6) mit Längsschlitzen (7) bzw. Brechnuten aufweist und eine sich konisch verjüngende Bohrung (5) besitzt, die zur Aufnahme eines Spreizkörpers (3) ausgebildet ist, und im Spreizbereich (6) mit umlaufenden Rillen (9) von etwa V-förmigem Profil ausgestattet ist, die durch umlaufende zylindrische Bereiche (8) getrennt sind, **dadurch gekennzeichnet**, dass die Flanken (10, 11) der umlaufenden Rillen (9) einen Winkel (α) von etwa 120° bis etwa 140° einschliessen.

2. Vorrichtung nach Anspruch 1, dadurch gekennzeichnet, dass im Spreizbereich (6) wenigstens zwei umlaufende Rillen (9) angeordnet sind und dass die Anzahl der umlaufenden zylindrischen Bereiche (8) der Anzahl Rillen (9) entspricht.

3. Vorrichtung nach Anspruch 1 oder 2, dadurch gekennzeichnet, dass die Rillen (9) eine Breite (b) aufweisen, die etwa das Dreifache bis etwa das Zehnfache einer Breite (a) des die Rillen (9) trennenden zylindrischen Bereichs (8) beträgt.

4. Vorrichtung nach einem der vorangehenden Ansprüche, dadurch gekennzeichnet, dass die Rillen (9) eine Tiefe (c) aufweisen, die maximal der halben Wandstärke (d) des sich an die sich konisch verjüngende Bohrung (5) anschliessenden Bereiches (4) des zylindrischen Hülsenkörpers (2) entspricht.

5. Vorrichtung nach Anspruch 4, dadurch gekennzeichnet, dass die Tiefe (c) der Rillen (9) etwa der Breite (a) des die Rillen (9) trennenden zylindrischen Bereichs (8) entspricht.

6. Vorrichtung nach einem der vorangehenden Ansprüche, dadurch gekennzeichnet, dass der Spreizbereich (6) des zylindrischen Hülsenkörpers (2) maximal 4 Rillen (9) aufweist.

## Claims

1. Expansion dowel with a cylindrical sleeve body (2) comprising an expansion area (6) with longitudinal slots (7) or breaking grooves and a conically narrowing bore (5) designed to receive an expansion body (3), and in the expansion area (6) provided with peripheral grooves (9) of approximately V-shaped profile which are separated by peripheral cylindrical areas (8), **characterised in that** the flanks (10, 11) of the peripheral grooves (9) include an angle (α) of approximately between 120° and 140°.

2. Device according to Claim 1, **characterised in that** at least two peripheral grooves (9) are arranged in the expansion area (6), and the number of peripheral cylindrical areas (8) corresponds with the number of grooves (9).

3. Device according to Claim 1 or 2, **characterised in that** the grooves (9) have a width (b) of approximately between three times and ten times a width (a) of the cylindrical area (8) which separates the grooves (9).

4. Device according to one of the above claims, **characterised in that** the grooves (9) have a depth (c) which corresponds with maximum half the wall thickness (d) of the area (4) of the cylindrical sleeve body (2) which is adjacent the conically narrowing bore (5).

5. Device according to Claim 4, **characterised in that** the depth (c) of the grooves (9) corresponds approximately with the width (a) of the cylindrical area (8) which separates the grooves (9).

6. Device according to one of the above claims, **characterised in that** the expansion area (6) of the cylindrical sleeve body (2) comprises maximum 4 grooves (9).

## Revendications

1. Cheville à expansion, comprenant un corps en forme de douille cylindrique (2) qui présente une zone expansible (6) avec des fentes longitudinales (7) et respectivement des rainures de rupture et comporte un alésage (5) lequel se rétrécit de manière conique et est conformé pour la réception d'un corps d'écartement (3), et qui est pourvue dans la zone expansible (6) de gorges circulaires (9) présentant un profil sensiblement en V et séparées par des zones cylindriques circulaires (8), **caractérisée en ce** que les flancs (10, 11) des gorges circulaires (9) renferment un angle (α) d'environ 120° à environ 140°.

2. Dispositif selon la revendication 1, caractérisé en ce que dans la zone expansible (6) sont disposées au moins deux gorges circulaires (9), et que le nombre des zones cylindriques circulaires (8) correspond au nombre des gorges (9).

3. Dispositif selon la revendication 1 ou 2, caractérisé en ce que les gorges (9) présentent une largeur (b) égale à environ trois fois à environ dix fois une largeur (a) de la zone cylindrique (8) qui sépare les gorges (9).

4. Dispositif selon l'une des revendications précédentes, caractérisé en ce que les gorges (9) présentent une profondeur (c) qui correspond au maximum à la moitié de l'épaisseur de paroi (d) de la section (4) du corps en forme de douille cylindrique (2) qui fait suite à l'alésage (5) se rétrécissant de manière conique.

5. Dispositif selon la revendication 4, caractérisé en ce que la profondeur (c) des gorges (9) correspond sensiblement à la largeur (a) de la zone cylindrique (8) qui sépare les gorges (9).

6. Dispositif selon l'une des revendications précédentes, caractérisé en ce que la zone expansible (6) du corps de douille cylindrique (2) comprend au maximum 4 gorges (9).
